# EUROPEAN PATENT SPECIFICATION

(11) **EP 2 295 789 B1**
(45) Date of publication and mention of the grant of the patent: **18.06.2014**
(21) Application number: 10174627.9
(22) Date of filing: 31.08.2010
(51) Int. Cl.: F02N 11/08, B60K 35/00, B60W 30/16, B60W 30/18, B60K 28/10

(54) **Engine start device**
Motorstartvorrichtung
Dispositif de démarrage de moteur

(30) Priority: 11.09.2009 JP 2009210498
(43) Date of publication of application: 16.03.2011
(73) Proprietor: Honda Motor Co., Ltd., Tokyo 107-8556 (JP)
(72) Inventor: Endo, Masatoshi, Saitama 351-0193 (JP); Nishio, Masaki, Saitama 351-0193 (JP); Kawai, Ryuji, Saitama 351-0193 (JP); Narita, Kennosuke, Saitama 351-0193 (JP); Tsuda, Masaki, Saitama 351-0193 (JP)
(74) Representative: Trossin, Hans-Jürgen

(56) References cited:
- DE-A1-102007 009 831
- JP-A- 2 037 175
- JP-A- 2008 298 048
- JP-A- 2009 167 928
- US-B1- 6 271 749
- US-B1- 6 371 889

## Description

### BACKGROUND OF THE INVENTION

### Field of the Invention

The present invention relates to an engine start device.

### Description of Related Art

Conventionally, a engine start system is known in which, for example, in the case of the brake pedal of a diesel vehicle being depressed by the driver, and an engine start switch being actuated by the driver, preheating of the engine is started and then the time required for the engine being capable of starting is displayed on a display screen (for example, refer to Japanese Unexamined Patent Application, First Publication No. 2006-77592). In the aforementioned engine start system, the engine is started in the case of the brake pedal being depressed by the driver when the preheating has finished or after the preheating has finished.

According to the engine start system of the aforementioned prior art, the execution of a predetermined operation of the brake pedal and the start switch is set as a start requirement for a diesel vehicle. For example, it is desired that suitable start requirements be set for a vehicle that is provided with a drive source that differs from the aforementioned.

According to the engine start system of the aforementioned prior art, since a determination is made whether or not the brake pedal is depressed by the driver at the point at which the engine becomes capable of starting (that is, when the preheating is finished) or after preheating is finished, there is the risk of the problem arising of convenience and safety not being securable. That is, in the case where a determination is made whether or not the brake pedal is depressed by the driver when preheating is finished, the problem arises of the driver being required to carry out a difficult operation of accurately grasping the timing of when the preheating has finished. Additionally, in the case of simply determining the presence of the depression of the brake pedal by the driver after preheating has finished, the problem arises of the engine starting up when the driver, after interrupting the execution of the operation required for engine start, depressing the brake pedal without the intention of starting.

JP 2008 298 048 A, on which the preamble of claim 1 is based, discloses a system in which the lamp 13 is turned on upon the starting of the preheating and the lamp 13 is turned off upon the completion of the preheating while the preheating time is appropriately controlled. However, if an occupant inadvertently depresses the clutch pedal without waiting the completion of the preheating, the engine will be started.

DE 10 2007 009 831 A1 discloses an engine start device in which a display lamp (A1) is turned on to show that the automatic engine starting is unable on conditions like "the clutch pedal is not depressed", "the gear is not in neutral position", "the door hood is open" or "the brake pedal is not activated", during idle reduction. After a predetermined interval without such conditions being resolved, the display lamp (A1) would be turned off and a display lamp (A3) would be turned on, where manual starting would be performed instead of automatic starting. The display lamp (A1) is turned on only for preventing the engine from stalling out due to emergency such as low battery resulting from long term continuation of idle reduction mode.

JP 2009 167 928 A discloses a vehicle in which the engine is automatically started after the completion of the preheating. In particular, when it is detected that an occupant in the vehicle gets out the vehicle, the engine will not be started. If an occupant inadvertently depresses the clutch pedal without waiting the completion of the preheating, the engine will be started.

JP 2 037 175 A only discloses a timer for displaying the remaining time of the preheating but is completely silent about engine control related to preheating.

The present invention was achieved in view of the above circumstances, and has an object of providing an engine start device that can improve the convenience and safety during vehicle start up.

### SUMMARY OF THE INVENTION

In order to solve the aforementioned issue and achieve the object, the invention provides an engine start device in accordance with claim 1. The engine start device according to the first aspect of the present invention includes: a clutch switch that detects a predetermined depression operation of a clutch pedal by a driver; an engine start switch that detects a predetermined engine start operation by the driver; a controller that starts the engine of a vehicle in accordance with a depression operation of the clutch pedal by the driver that is detected by the clutch switch and a predetermined engine start operation by the driver that is detected by the engine start switch; a preheating necessity determination part that determines whether or not preheating of the engine is necessary when the depression operation of the clutch pedal by the driver has been detected by the clutch switch and the predetermined engine start operation by the driver has been detected by the engine start switch; an engine preheating part that starts preheating of the engine in the case of preheating of the engine being determined to be necessary by the preheating necessity determination part; a depression monitoring part that monitors whether or not a depression operation of the clutch pedal by the driver has been detected by the clutch switch during a predetermined time around a point in time at which preheating of the engine by the engine preheating part is completed; and a display part that, prior to the passage of the predetermined time from the point in time at which preheating of the engine is completed, performs a display that prompts execution of a depression of the clutch pedal while a depression operation of the clutch pedal by the driver has not been detected by the clutch switch, wherein the controller starts the engine in the case of a depression operation of the clutch pedal by the driver being detected by the clutch switch when a display that prompts execution of a depression of the clutch pedal is performed by the display part, and prohibits starting of the engine when a depression operation of the clutch pedal by the driver has been detected by the clutch switch after the passage of the predetermined time from the point in time when preheating of the engine is completed.

Based on the engine start device according to the first aspect of the present invention, since a depression of the clutch pedal is included in the start conditions of the vehicle, it is possible to secure a desired margin of safety at the time of vehicle starting, for example in a vehicle with a manual transmission or the like.

Moreover, starting of the engine in response to a depression operation of the clutch pedal is possible during a period from the point in time at which preheating of the engine is completed until the passage of a predetermined time. Accordingly, it is possible to prevent the engine from starting without the intent of the driver, and ensure a desired margin of safety, while ensuring a desired convenience during engine start.

Moreover, in an engine start device according to a second aspect of the present invention, the display part performs a display that prompts execution of a depression of the clutch pedal, and displays the remaining time until the point in time at which the predetermined time from the point in time when preheating of the engine is completed passes.

Based on the engine start device according to the second aspect of the present invention, it is possible to make the driver clearly grasp the period during which starting of the engine is possible just by execution of a depression operation of the clutch pedal, and it is possible to enhance convenience during engine start.

Moreover, in an engine start device according to a third aspect of the present invention, the display part performs a display that prompts execution of a depression operation of the clutch pedal and an operation of the engine start switch by the driver in the case of a depression operation of the clutch pedal by the driver being detected by the clutch switch after the passage of the predetermined time from the point in time at which preheating of the engine is completed.

Based on the engine start device according to the third aspect of the present invention, it is possible to make the driver clearly grasp the state in which starting of the engine just by execution of a depression operation of the clutch pedal is impossible, and it is possible to enhance convenience during engine start.

### BRIEF DESCRIPTION OF THE DRAWINGS

FIG. 1 is a configuration drawing of an engine start device according to an embodiment of the present invention.
FIG. 2 is a drawing that shows an example of the timing chart that shows the operation of the engine start device according to the embodiment, and examples of the screen display.
FIG. 3 is a map that shows the correspondence relationship between the water temperature, the atmospheric pressure, and the pre-glow time of the engine start device according to the embodiment.
FIG. 4 is a flowchart that shows the operation of the engine start device according to the embodiment.

### DETAILED DESCRIPTION OF THE INVENTION

Hereinbelow, the engine start device according to an embodiment of the present invention will be described with reference to the appended drawings.

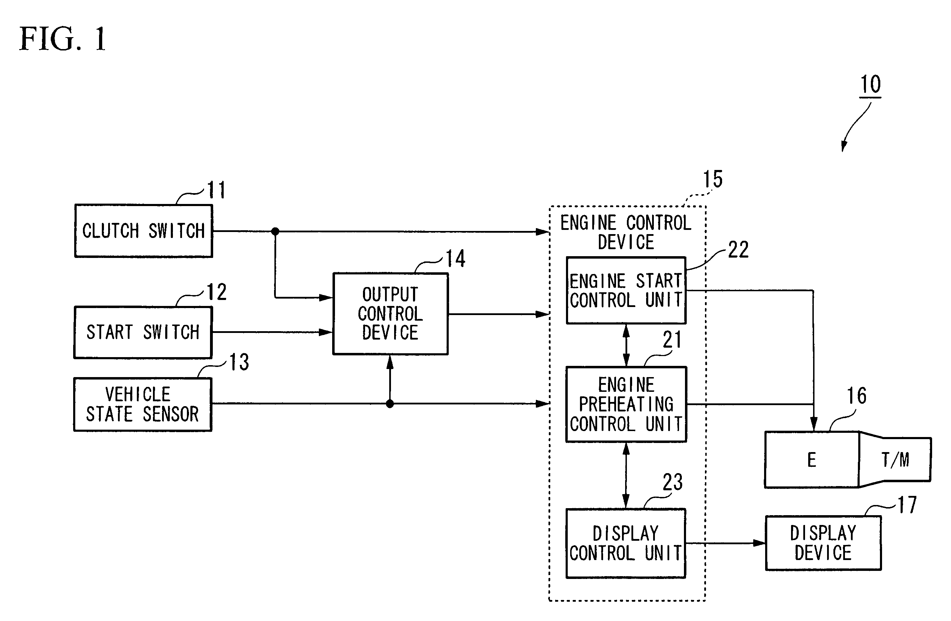

An engine start device 10 of the present embodiment is provided, for example, with a clutch switch (clutch switch) 11, a start switch (engine start switch) 12, a vehicle state sensor 13, an output control device 14, an engine control device 15, an internal combustion engine (engine: E) 16, and a display device (display part) 17, as shown in FIG. 1.

The clutch switch 11 outputs a signal in accordance with the operation amount of the depression operation of the clutch pedal by the driver.

The start switch 12 outputs a signal in accordance with the input operation by the vehicle start intention of the driver.

The vehicle state sensor 13 is provided with a sensor that detects the temperature of the cooling water (water temperature) of the cooling system of the internal combustion engine 16, a sensor that detects atmospheric pressure, and a sensor that detects the number of rotations of the internal combustion engine, and outputs a signal of the detection result of each vehicle state amount of the vehicle.

The output control device 14, based on the signals output from the clutch switch 11 and the start switch 12, controls the switching of the state of the power supply (not illustrated), and outputs to the engine control device 15 a start request signal that instructs the start of the internal combustion engine in accordance with the vehicle start intention of the driver.

The engine control device 15 controls the operation of the internal combustion engine (E) 16 and the display device 17 based on for example the signals that are output from the clutch switch 11 and the start switch 12, and the signal that is output from the vehicle state sensor 13. The engine control device 15 is provided with, for example, an engine preheating control unit (preheating necessity determination part, engine preheating part) 21, an engine start control unit (controller, depression monitoring part) 22, and a display control unit (display part) 23.

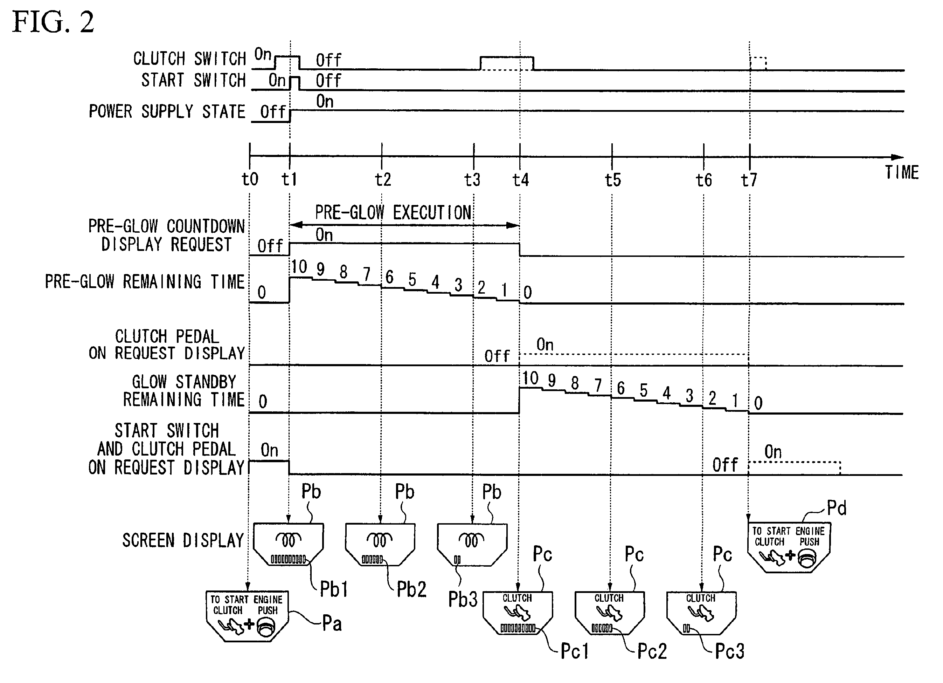

The engine preheating control unit 21 determines whether or not preheating of the internal combustion engine 16 is necessary based on a signal that is output from the vehicle state sensor 13 when a signal that indicates that the depression operation amount of the clutch pedal by the driver is equal to or greater than a predetermined amount (clutch operation signal) is output from the clutch switch 11, and a signal that indicates that the input of a predetermined operation to the start switch 12 has been executed (switch operation signal) is output from the start switch 12 (for example, time t1 shown in FIG. 2). In the case of preheating of the internal combustion engine 16 having been determined to be unnecessary, a signal of this determination result is output to the engine start control unit 22.

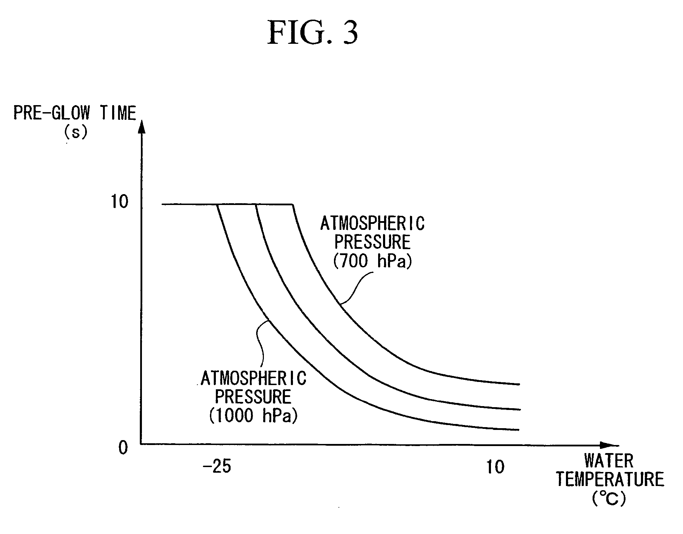

Additionally, in the case of the engine preheating control unit 21 having determined that preheating of the internal combustion engine 16 is necessary, it outputs a signal of this determination result to the engine start control unit 22, and starts preheating (pre-glow) of the internal combustion engine 16. The time of continuing this preheating (pre-glow) is calculated by a map search for a predetermined map that has been created in advance based on the signal that is output from the vehicle state sensor 13. Note that this predetermined map indicates the correspondence relationship between the temperature of the cooling water (water temperature) of the cooling system of the internal combustion engine 16 and atmospheric pressure and the pre-glow time. For example, as shown in FIG. 3, a predetermined maximum time (for example, 10 sec. or the like) is set for the pre-glow time. Also, the pre-glow time is set so as to change in a decreasing tendency as the water temperature rises or as the atmospheric pressure increases.

The engine preheating control unit 21 sets "1" to the flag value of a pre-glow countdown display request over the time until this preheating (pre-glow) is completed (for example, times t1 to t4 shown in FIG. 2). Then, the engine preheating control unit 21 outputs to the display control unit 23 a command signal that instructs the performance by the display device 17 of a display that shows that preheating is in progress (preheating execution display, for example the display of the image Pb in the screen display shown in FIG. 2), and the display of the pre-glow remaining time (that is, the time required until the completion of preheating) (for example, the display of the progress bar images Pb1 to Pb3 corresponding to the pre-glow remaining time in the screen display shown in FIG. 2).

Moreover, the engine preheating control unit 21 outputs a signal that indicates preheating completion to the engine start control unit 22 and the point in time when preheating is completed, and outputs to the display control unit 23 a command signal that instructs the stopping of the preheating execution display and the display of the pre-glow remaining time.

The engine start control unit 22 sets "1" to the flag value of the start switch and the clutch pedal ON request display during stoppage of the internal combustion engine 16 in which a clutch operation signal and a switch operation signal have not been simultaneously output (for example, the period of time t0 to t1 shown in FIG. 2). Then, the engine start control unit 22 outputs to the display control unit 23 a command signal that instructs the performance by the display device 17 of a display that prompts the execution of a depression operation of the clutch pedal and input of a predetermined operation to the start switch 12 by the driver (start operation request display, for example, the display of the image Pa in the screen display shown in FIG. 2).

Moreover, the engine start control unit 22 starts the internal combustion engine 16 by the start of cranking in the case that a signal that shows that preheating of the internal combustion engine 16 is unnecessary being output from the engine preheating control unit 21, when for example a clutch operation signal has been output from the clutch switch 11, and a switch operation signal has been output from the start switch 12 (for example, the time t1 shown in FIG. 2).

In addition, the engine start control unit 22 monitors whether or not the clutch operation signal has been output from the clutch switch 11 during a predetermined time (for example, 10 sec. or the like) around the point in time at which the preheating is completed (for example, the time t4 shown in FIG. 2), in the case of a signal that shows that preheating of the internal combustion engine 16 is necessary being output from the engine preheating control unit 21, when for example a clutch operation signal has been output from the clutch switch 11, and a switch operation signal has been output from the start switch 12 (for example, the time t1 shown in FIG. 2).

And when a signal that shows preheating completion is output from the engine preheating control unit 21 (for example, at time t4 in FIG. 2), if a clutch operation signal is output from the clutch switch 11, the engine start control unit 22 starts the internal combustion engine 16.

In addition, prior to a predetermined time (for example, 10 sec. or the like) elapsing (times t4 to t7 shown in FIG. 2) from the point in time at which preheating is completed (for example, the time t4 shown in FIG. 2), the engine start control unit 22 sets "1" to the flag value of the clutch pedal ON request display while a clutch operation signal is not being output from the clutch switch 11. Then, the engine start control unit 22 outputs to the display control unit 23 a command signal that instructs the performance by the display device 17 of a display that prompts the execution of a depression operation of the clutch pedal by the driver (the clutch operation request display, for example, the display of the image Pc in the screen display shown in FIG. 2) and the display of the remaining time (glow standby remaining time) until the point in time at which the predetermined time (for example, 10 sec. or the like) from the point in time at which preheating is completed has elapsed (for example, the display of the progress bar images Pc1 to Pc3 corresponding to the glow standby remaining time in the screen display shown in FIG. 2).

In the case of the clutch operation signal being output from the clutch switch 11 prior to the passage of the predetermined time (for example, 10 sec. or the like) from the point in time at which preheating is completed (for example, the time t4 shown in FIG. 2), it outputs to the display control unit 23 a command signal that instructs stoppage of the clutch operation request display and the display of the glow standby time, and starts the internal combustion engine 16.

In addition, in the case of the clutch operation signal being output from the clutch switch 11 after the passage of the predetermined time (for example, 10 sec. or the like) from the point in time at which preheating is completed, it sets "1" to the flag value of the start switch and the clutch pedal ON request display, and outputs to the display control unit 23 a command signal that instructs the performance by the display device 17 of a start operation request display (for example, the display of the image Pd in the screen display shown in FIG. 2).

In the case of the clutch operation signal being output from the clutch switch 11, and the switch operation signal being output from the start switch 12, it outputs to the display control unit 23 a command signal that instructs the stoppage of the start operation request display, and outputs to the engine preheating control unit 21 a command signal that instructs the determination of whether or not preheating of the internal combustion engine 16 is necessary. In doing so, the engine preheating control unit 21 determines whether or not preheating of the internal combustion engine 16 is necessary based on the signal that is output from the vehicle state sensor 13. Then, in the case of the engine preheating control unit 21 determining that preheating is necessary, it starts preheating of the internal combustion engine 16. Also, in the case of the engine preheating control unit 21 determining that preheating is not necessary, the engine start control unit 22 starts the internal combustion engine 16.

The engine start device 10 of the present embodiment is provided with the aforementioned constitution, and next the operation of the engine start device 10 shall be described.

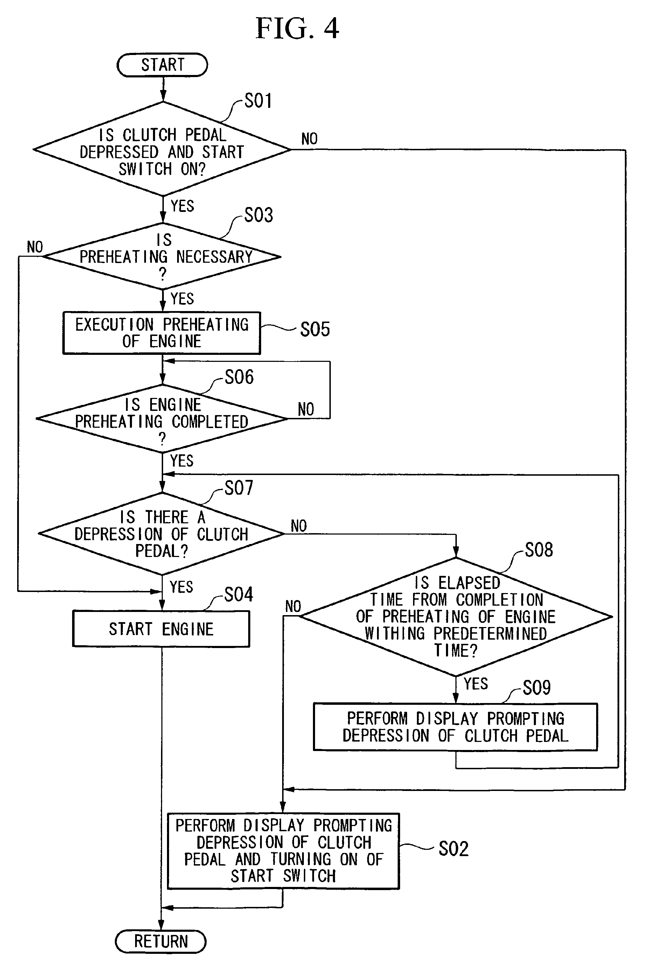

First, in Step S01 shown in FIG. 4 for example, a signal that shows that the depression operation amount of the clutch pedal by the driver is equal to or greater than a predetermined amount is output from the clutch switch 11, and it is determined whether or not a signal that shows that an input of a predetermined operation to the start switch 12 has been executed has been output from the start switch 12.

If this determination result is "NO", the process proceeds to Step S02, and in this Step S02, a display prompting the execution of a depression operation of the clutch pedal by the driver and the input of a predetermined operation to the start switch 12 is performed, and the process proceeds to return.

On the other hand, in the case of this determination result being "YES", the process proceeds to Step S003.

Next, in Step S03, it is determined whether or not preheating of the internal combustion engine 16 is necessary.

In the case of this determination result being "NO", the process proceeds to Step S04, and in Step S04, the internal combustion engine 16 is started, and the process proceeds to return.

In Step S05, preheating of the internal combustion engine 16 is executed.

Then, in Step S06, it is determined whether or not preheating of the internal combustion engine 16 is completed.

If this determination result is "NO", the determination process of Step S06 is repeated.

On the other hand, if this determination result is "YES", the process proceeds to Step S07.

Then in Step S07, it is determined whether or not a signal that shows that the depression operation amount of the clutch pedal by the driver is equal to or greater than a predetermined amount has been output from the clutch switch 11.

In the case of this determination result being "YES", the process proceeds to the aforementioned Step S04.

On the other hand, in the case of this determination result being "NO", the process proceeds to Step S08.

Then, in Step S08, it is determined whether or not the elapsed time from the point in time at which preheating of the internal combustion engine 16 is completed is within a predetermined time.

If this determination result is "NO", the process proceeds to the aforementioned Step S02.

On the other hand, in the case of this determination result being "YES", the process proceeds to Step S09.

In Step S09, in the case of this determination result being "NO", the process proceeds to Step S10, and in Step S10, a display prompting the execution of a depression operation of the clutch pedal by the driver is performed, and the process returns.

As described above, according to the engine start device 10 of the present embodiment, by including the depression of the clutch pedal in the start condition of the vehicle, it is possible to secure a desired margin of safety at the time of vehicle starting, for example in a vehicle with a manual transmission or the like.

Moreover, since starting of the internal combustion engine 16 in accordance with the depression operation of the clutch pedal is possible during a period from the point in time at which preheating of the internal combustion engine 16 is completed until the passage of a predetermined time, it is possible to prevent the internal combustion engine 16 from starting without the intent of the driver, and ensure a desired margin of safety, while ensuring a desired convenience during engine start.

Moreover, it is possible to make the driver clearly grasp the period during which starting of the internal combustion engine 16 is possible just by execution of a depression operation of the clutch pedal, and it is possible to enhance convenience during engine start.

Moreover, it is possible to make the driver clearly grasp the state in which starting of the engine just by execution of a depression operation of the clutch pedal is impossible, and it is possible to enhance convenience during engine start.

Note that in the aforementioned embodiment, in the case of a clutch operation signal being output from the clutch switch 11 after the passage of a predetermined time from the point in time at which preheating is completed, a command signal that instructs the performance of a start operation request display (for example, the display of the image Pd in the screen display shown in FIG. 2) was made to be output. However, the present invention is not limited thereto. For example, if at a point in time at which a predetermined time (for example, 10 sec. or the like) has elapsed from the point in time at which preheating is completed, it may output to the display control unit 23 a command signal that instructs the performance by the display device 17 of a start operation request display (for example, the display of the image Pd in the screen display shown in FIG. 2), even if for example a clutch operation signal has not been output from the clutch switch 11.

In this case, since it returns to the initial screen prior to the start of the pre-glow countdown, that is, the start operation request display (for example, the display of the image Pa in the screen display shown in FIG. 2), it is possible to prevent the driver feeling a sense of discomfort. In addition, it is possible to again inform the method of engine start, and possible to enhance the convenience.

While a preferred embodiment of the invention has been described and illustrated above, it should be understood that this is exemplary of the invention and is not to be considered as limiting. Additions, omissions, substitutions, and other modifications can be made without departing from the scope of the appended claims. Accordingly, the invention is not to be considered as being limited by the foregoing description, and is only limited by the scope of the appended claims.

The engine start device includes: a clutch switch that detects a predetermined depression operation of a clutch pedal; an engine start switch that detects a predetermined engine start operation; a controller that starts the engine of a vehicle in accordance with a depression operation of the clutch pedal and a predetermined engine start operation; a preheating necessity determination part that determines whether or not preheating of the engine is necessary when the depression operation of the clutch pedal and the predetermined engine start operation has been detected; an engine preheating part that starts preheating of the engine in the case of preheating of the engine being determined to be necessary; a depression monitoring part that monitors whether or not a depression operation of the clutch pedal has been detected during a predetermined time around a point in time at which preheating of the engine is completed; and a display part that performs a display that prompts execution of a depression of the clutch pedal while a depression operation of the clutch pedal has not been detected, wherein the controller starts the engine in the case of a depression operation of the clutch pedal being detected when a display that prompts execution of a depression of the clutch pedal is performed, and prohibits starting of the engine when a depression operation of the clutch pedal has been detected by the clutch switch after the passage of the predetermined time from the point in time when preheating of the engine is completed.

## Claims

1. An engine start device comprising:
a clutch switch (11) that detects a predetermined depression operation of a clutch pedal by a driver;
an engine start switch (12) that detects a predetermined engine start operation by the driver;
a controller (15) that starts the engine (16) of a vehicle in accordance with a depression operation of the clutch pedal by the driver that is detected by the clutch switch (11) and a predetermined engine start operation by the driver that is detected by the engine start switch (12);
a preheating necessity determination part (21) that determines whether or not preheating of the engine (16) is necessary when the depression operation of the clutch pedal by the driver has been detected by the clutch switch (11) and the predetermined engine start operation by the driver has been detected by the engine start switch (12);
an engine preheating part that starts preheating of the engine (16) in the case of preheating of the engine being determined to be necessary by the preheating necessity determination part (21);
a depression monitoring part (22) that monitors whether or not a depression operation of the clutch pedal by the driver has been detected by the clutch switch (11) during a predetermined time from a point in time at which preheating of the engine by the engine preheating part (21) is completed; and
a display part (23) that shows, in a first image (Pb) the time required until completion of preheating while the engine (16) is preheated;
**characterized in that** the display part (23), prior to the end of the predetermined time from the point in time at which preheating of the engine is completed, shows a second image (Pc) that prompts execution of a depression of the clutch pedal in accordance with a depression operation of the clutch pedal by the driver has not been detected by the clutch switch (11),
wherein the controller (15) starts the engine (16) in accordance with a depression operation of the clutch pedal by the driver being detected by the clutch switch (11) when a display that prompts execution of a depression of the clutch pedal is performed by the display part (23),
wherein the display part (23) shows a third image (Pd) that prompts execution of a depression operation of the clutch pedal and an operation of the engine start switch (12) by the driver after the passage of the predetermined time from the point in time when preheating of the engine is completed and
wherein the controller (15) prohibits starting of the engine (16) when a depression operation of the clutch pedal by the driver has been detected by the clutch switch (11) after the passage of the predetermined time from the point in time when preheating of the engine is completed.

2. The engine start device according to claim 1,
wherein the third image (Pd) shown by the display part (23) prompts execution of a depression of the clutch pedal, and displays the remaining time until the point in time at which the predetermined time from the point in time when preheating of the engine is completed passes.

3. The engine start device according to claim 1,
wherein the controller does not start the engine in the case of a depression operation of the clutch pedal by the driver being not detected by the clutch switch when a display that prompts execution of a depression of the clutch pedal is performed by the display part, and starts the engine in the case of a depression operation of the clutch pedal and an operation of the engine start switch by the driver being executed after the passage of the predetermined time from the point in time when preheating of the engine is completed.

## Patentansprüche

1. Motorstartvorrichtung, welche aufweist:
einen Kupplungsschalter (11), der eine vorbestimmte Druckbetätigung eines Kupplungspedals durch einen Fahrer erfasst;
einen Motorstartschalter (12), der eine vorbestimmte Motorstartbetätigung durch den Fahrer erfasst;
einen Controller (15), der den Motor (16) eines Fahrzeugs entsprechend einer Druckbetätigung des Kupplungspedals durch den Fahrer, die durch den Kupplungsschalter (11) erfasst wird, und einer vorbestimmten Motorstartbetätigung durch den Fahrer, die durch den Motorstartschalter (12) erfasst wird, startet;
ein Vorheizerfordernis-Bestimmungsteil (21), das bestimmt, ob ein Vorheizen des Motors (16) erforderlich ist oder nicht, wenn die Druckbetätigung des Kupplungspedals durch den Fahrer vom Kupplungsschalter (11) erfasst worden ist und die vorbestimmte Motorstartbetätigung durch den Fahrer durch den Motorstartschalter (12) erfasst worden ist;
ein Motorvorheizteil, das den Motor (16) vorheizt, falls durch das Vorheizerfordernis-Bestimmungsteil (21) bestimmt worden ist, dass das Vorheizen des Motors erforderlich ist;
ein Drucküberwachungsteil (22), das überwacht, ob eine Druckbetätigung des Kupplungspedals durch den Fahrer vom Kupplungsschalter (11) während einer vorbestimmten Zeit ab einem Zeitpunkt, zu dem das Vorheizen des Motors durch das Motorvorheizteil (21) abgeschlossen ist, erfasst worden ist; und
ein Anzeigeteil (23), das, während der Motor (16) vorgeheizt wird, in einem ersten Bild (Pb) die Zeit zeigt, die benötigt wird, bis das Vorheizen abgeschlossen ist;
**dadurch gekennzeichnet, dass** das Anzeigeteil (23) vor dem Ende der vorbestimmten Zeit ab dem Zeitpunkt, zu dem das Vorheizen des Motors abgeschlossen ist, ein zweites Bild (Pc) zeigt, das die Ausführung vom Drücken des Kupplungspedals auffordert, wenn eine Druckbetätigung des Kupplungspedals durch den Fahrer vom Kupplungsschalter (11) nicht erfasst worden ist,
worin der Controller (15) den Motor (16) startet, wenn eine Druckbetätigung des Kupplungspedals durch den Fahrer vom Kupplungsschalter (11) erfasst wird, wenn durch das Anzeigeteil (23) eine Anzeige erfolgt, die die Ausführung vom Drücken des Kupplungspedals auffordert,
worin, nach Ablauf der vorbestimmten Zeit ab dem Zeitpunkt, wenn das Vorheizen des Motors abgeschlossen ist, das Anzeigeteil (23) ein drittes Bild (Pd) zeigt, das die Ausführung von Druckbetätigung des Kupplungspedals und der Betätigung des Motorstartschalters (12) durch den Fahrer auffordert, und
worin der Controller (15) den Start des Motors (16) verhindert, wenn eine Druckbetätigung des Kupplungspedals durch den Fahrer vom Kupplungsschalter (11) nach Ablauf der vorbestimmten Zeit ab dem Zeitpunkt, wenn das Vorheizen des Motors abgeschlossen ist, erfasst worden ist.

2. Die Motorstartvorrichtung nach Anspruch 1, worin das vom Anzeigeteil (23) gezeigte dritte Bild (Pd) die Ausführung zum Drücken des Kupplungspedals auffordert, und die Restzeit bis zu dem Zeitpunkt anzeigt, an dem die vorbestimmte Zeit ab dem Zeitpunkt, wenn das Vorheizen des Motors abgeschlossen ist, abläuft.

3. Die Motorstartvorrichtung nach Anspruch 1, worin der Controller den Motor nicht startet, falls eine Druckbetätigung des Kupplungspedals durch den Fahrer vom Kupplungsschalter nicht erfasst wird, wenn eine Anzeige, die das Ausführen vom Drücken des Kupplungspedals auffordert, vom Anzeigeteil durchgeführt wird, und den Motor startet, falls eine Druckbetätigung des Kupplungspedals und eine Betätigung des Motorstartschalters durch den Fahrer nach dem Ablauf der vorbestimmten Zeit ab dem Zeitpunkt, wenn das Vorheizen des Motors abgeschlossen ist, ausgeführt wird.

## Revendications

1. Un dispositif de démarrage d'un moteur comprenant :
un contacteur d'embrayage (11) qui détecte un actionnement par pression préalablement déterminé d'une pédale d'embrayage par un conducteur ;
un contacteur de démarrage du moteur (12) qui détecte un actionnement de démarrage du moteur préalablement déterminé par le conducteur ;
une commande (15) qui démarre le moteur (16) d'un véhicule conformément à un actionnement par pression de la pédale d'embrayage par le conducteur qui est détecté par le contacteur d'embrayage (11) et un actionnement de démarrage du moteur préalablement déterminé par le conducteur qui est détecté par le contacteur de démarrage du moteur (12) ;
une partie de détermination de la nécessité du préchauffage (21) qui détermine si un préchauffage du moteur (16) est nécessaire ou non lorsque l'actionnement par pression de la pédale d'embrayage par le conducteur a été détecté par le contacteur d'embrayage (11) et que l'actionnement de démarrage du moteur préalablement déterminé par le conducteur a été détecté par le contacteur de démarrage du moteur (12) ;
une partie de préchauffage du moteur qui commence à préchauffer le moteur (16) dans le cas où le préchauffage du moteur a été considéré comme nécessaire par la partie de détermination de la nécessité du préchauffage (21) ;
une partie de contrôle de la pression (22) qui contrôle si un actionnement par pression de la pédale d'embrayage par le conducteur a ou non été détecté par le contacteur d'embrayage (11) pendant un laps de temps préalablement déterminé à compter du moment où le préchauffage du moteur par la partie de préchauffage du moteur (21) est terminé ; et
une partie d'affichage (23) qui indique, dans une première image (Pb), le temps nécessaire jusqu'à l'achèvement du préchauffage alors que le moteur (16) est préchauffé;
**caractérisé en ce que** la partie d'affichage (23), avant la fin du laps de temps préalablement déterminé à partir du moment où le préchauffage du moteur est terminé,
montre une deuxième image (Pc) qui invite à l'exécution d'une pression sur la pédale d'embrayage lorsque l'actionnement par pression de la pédale d'embrayage par le conducteur n'a pas été détecté par le contacteur d'embrayage (11),
dans lequel la commande (15) démarre le moteur (16) conformément à la détection de l'actionnement par pression de la pédale d'embrayage par le conducteur par le contacteur d'embrayage (11) lorsqu'un affichage invitant à l'exécution d'une pression sur la pédale d'embrayage est effectué par la partie d'affichage (23),
dans lequel la partie d'affichage (23) montre une troisième image (Pd) qui invite à l'exécution d'un actionnement par pression de la pédale d'embrayage et d'un démarrage d'un actionnement du contacteur de démarrage du moteur (12) par le conducteur après l'expiration du laps de temps préalablement déterminé à compter du moment où le préchauffage du moteur est terminé et
dans lequel la commande (15) empêche le démarrage du moteur (16) lorsqu'un actionnement par pression de la pédale d'embrayage par le conducteur a été détecté par le contacteur d'embrayage (11) après l'expiration d'un laps de temps préalablement déterminé à compter du moment où le préchauffage du moteur est terminé.

2. Le dispositif de démarrage de moteur selon la revendication 1,
dans lequel la troisième image (Pd) affichée par la partie d'affichage (23) incite à l'exécution d'une pression sur la pédale d'embrayage et affiche le temps résiduel jusqu'au moment de l'expiration du laps de temps préalablement déterminé à compter du moment où le préchauffage du moteur est terminé.

3. Le dispositif de démarrage de moteur selon la revendication 1,
dans lequel la commande ne démarre pas le moteur dans le cas où un actionnement par pression de la pédale d'embrayage par le conducteur n'est pas détecté par le contacteur d'embrayage lorsqu'un affichage invitant à l'exécution d'une pression de la pédale d'embrayage est effectué par la partie d'affichage et démarre le moteur dans le cas d'un actionnement par pression de la pédale d'embrayage et d'un actionnement du contacteur de démarrage du moteur par le conducteur après l'expiration du laps de temps préalablement déterminé à compter du moment où le préchauffage du moteur est terminé.
